Europäisches Patentamt

European Patent Office

Office européen des brevets

(19)

(11) Numéro de publication: **0 194 168**
**A1**

(12) **DEMANDE DE BREVET EUROPEEN**

(21) Numéro de dépôt: 86400174.8

(51) Int. Cl.⁴: **A01B 61/04**

(22) Date de dépôt: 29.01.86

(30) Priorité: 01.03.85 FR 8503047

(43) Date de publication de la demande:
10.09.86 Bulletin 86/37

(84) Etats contractants désignés:
AT BE DE GB IT

(71) Demandeur: **Société de Constructions Mécaniques HUARD-UCF Société Anonyme**
**rue des Vauzelles**
**F-44110 Châteaubriant(FR)**

(72) Inventeur: **Meslet, Roger**
**10, rue de strasbourg**
**F-44110 Chateaubriant(FR)**

(74) Mandataire: Loyer, Bertrand et al
Cabinet Pierre Loyer 18, rue de Mogador
F-75009 Paris(FR)

(54) **Dispositif de sécurité pour charrues réversibles.**

(57) Dispositif de sécurité contre les surcharges pour charrue avec retour automatique après le passage d'un obstacle (19), dont l'age (1) supportant les corps droit (2) et gauche (3) peut se débattre dans toutes les directions, l'extrémité avant de l'age (1) étant munie d'une plaque d'appui (4) maintenue en appui à plat sur le bâti (14) de la charrue par un accumulateur d'énergie (18). La plaque d'appui (4) repose sur quatre basculeurs (5,6,7,8) articulés et disposés deux à deux de part et d'autre du plan de symétrie de l'age (1).

Fig. 2

EP 0 194 168 A1

Dispositif de sécurité pour charrues réversibles.

La présente invention concerne un dispositif de sécurité pour charrue réversible dont chaque age supportant les corps de labour droit et gauche peut pivoter dans toutes les directions lorsqu'un corps de labour rencontre un obstacle et revenir en position de travail automatiquement dès l'obstacle franchi.

Dans le brevet français PUECH n° 505.420, on décrit une charrue réversible comportant deux corps de labour, droit et gauche, portés par un timon en forme T, appelé age, ledit age étant relié au bâti de la charrue par l'intermédiaire d'une plaque d'appui en forme de croix, maintenue en appui contre ledit bâti par l'intermédiaire d'un système élastique.

Le pivotement de l'age, lors de la rencontre d'un obstacle, s'effectue autour d'une arête de la plaque d'appui en comprimant le système élastique ; ce dernier se détend après le passage de l'obstacle pour ramener l'age en position de travail. Le système élastique est constitué par quatre ressorts, chacun étant guidé par un tige de sorte que ces tiges assurent un guidage vertical et/ou latéral de la plaque.

Du fait du pivotement de la plaque, il faut un certain jeu entre la tige et son trou correspondant : il peut de ce fait y avoir un léger décalage de l'age en travail normal.

La présente invention se propose d'éliminer cet inconvénient par le fait que l'age est maintenue en appui à plat sur le bâti par un système élastique et que l'appui est réalisé par l'intermédiaire d'une plaque portant sur quatre basculeurs articulés et disposés deux à deux de part et d'autre du plan de symétrie de l'age, chaque basculeur articulé comportant une tige de guidage.

L'invention sera décrite ci-dessous à l'aide des figures qui représentent :

Figure I, une vue latérale d'un age de charrue en position de travail normal, suivant un premier mode de réalisation ;

Figure 2, une vue latérale lors du passage d'un obstacle ;

Figure 3, une vue de dessus partielle du dispositif de la figure 1 lors d'un débattement latéral de l'age ;

Figure 4, une vue latérale partielle d'une variante de réalisation du dispositif de la figure 1 ;

Figure 5, une vue en perspective partielle d'une deuxième variante de réalisation du dispositif de la figure 1 ;

Figures 6 et 7, une vue latérale partielle d'un deuxième mode de réalisation avec un age en position d'équilibre et en position déclenchée.

Figure 8, une vue latérale partielle d'une variante de réalisation du dispositif des figures 6 et 7 avec un age en position d'équilibre.

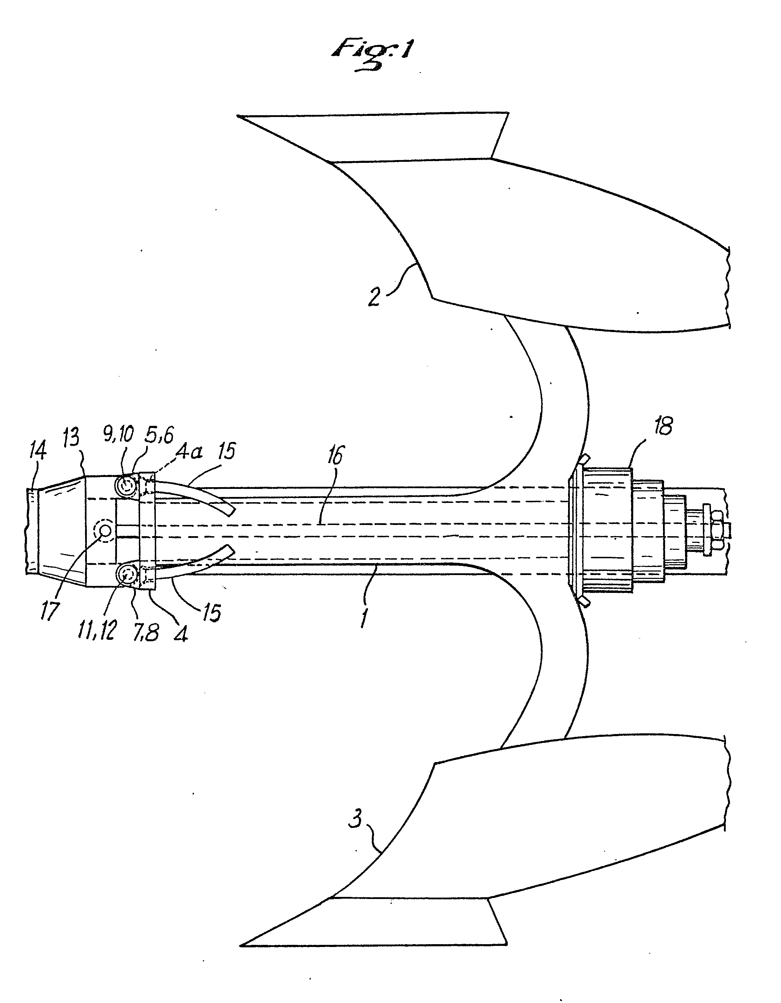

Les figures 1 à 3 représentent un premier mode de réalisation comportant un age 1 supportant les corps de labour droit et gauche 2 et 3. L'extrémité avant de l'age est constituée par une plaque d'appui 4 sensiblement perpendiculaire au sens d'avancement.

Cette plaque 4 s'appuie sur quatre basculeurs 5, 6, 7, 8 disposés deux à deux de part et d'autre du plan de symétrie horizontal de l'age 1. Ces basculeurs sont articulés respectivement autour de quatre axes 9, 10, 11, 12 portés par une console 13 solidaire du bâti 14 de la charrue.

Chaque basculeur est prolongé vers l'arrière par une tige 15 traversant la plaque 4 dont l'embase l5a peut être tronconique pour assurer un meilleur centrage de la plaque d'appui 4. Il peut y avoir un certain jeu entre le cône de la tige l5 et le trou 4a de la plaque 4 : cela facilitera la possibilité de débattement dans toutes les directions. Chaque tige 15 traverse un trou 4a de la plaque 4, le trou étant d'un diamètre légèrement supérieur à celui de la tige 15. Ladite tige 15 peut être droite ou en arc de cercle, orienté vers le basculeur symétrique, afin d'assurer un meilleur guidage pendant le pivotement de l'age en diminuant le jeu nécessaire entre la tige 15 et le trou 4a.

La plaque 4 est maintenue en appui sur les basculeurs par l'intermédiaire de la tige 16 dont l'extrémité avant est articulée en 17 sur la console 13, et l'extrémité arrière serrant contre l'age l'accumulateur d'énergie 18 représenté ici par un ressort en volute, mais qui peut également être constitué par tout type d'organe élastique mécanique ou hydropneumatique.

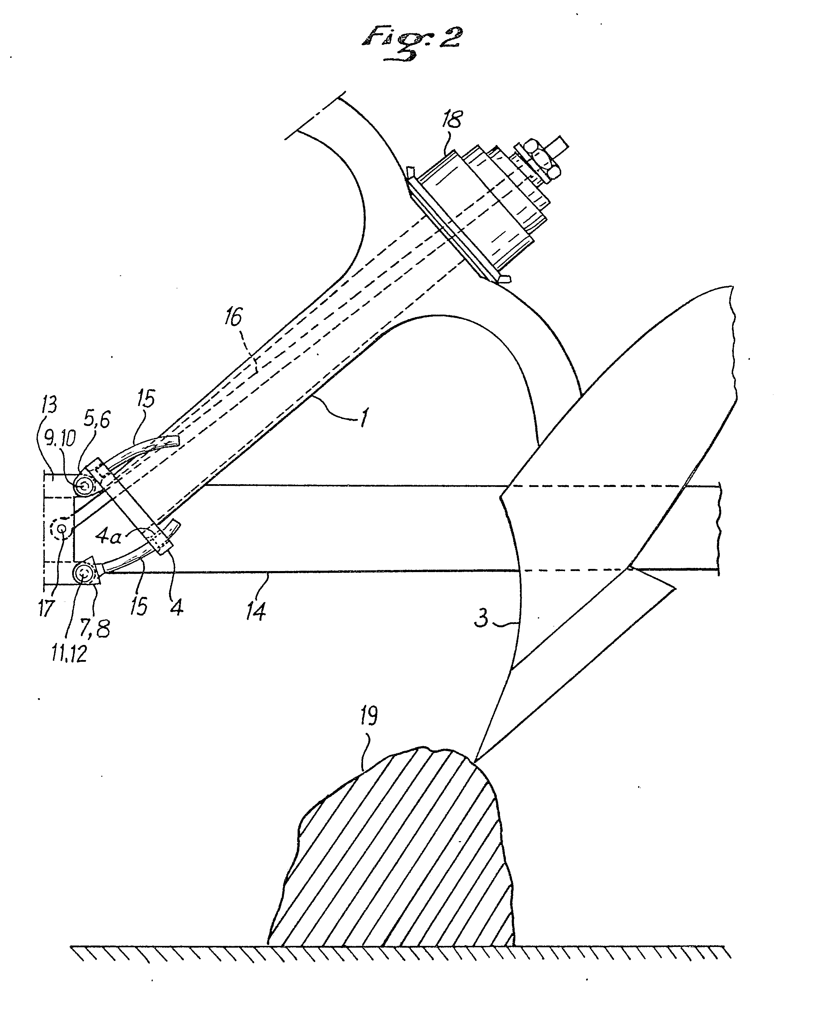

Le fonctionnement est le suivant : lorsque le corps de labour 3 rencontre l'obstacle 19 comme sur la figure 2, l'age pivote grâce à l'appui plat de la plaque 4 sur les basculeurs articulés 5 et 6 en comprimant le ressort 18. Les tiges 15 des basculeurs 7 et 8 coulissent dans les trous 4a de la plaque 4. Ainsi, lorsque l'obstacle sera passé, le ressort 18 se détendra ramenant l'age 1 en position d'équilibre tout en étant guidé, jusqu'à l'appui par les tiges 15 des basculeurs 7 et 8, dans les trous 4a.

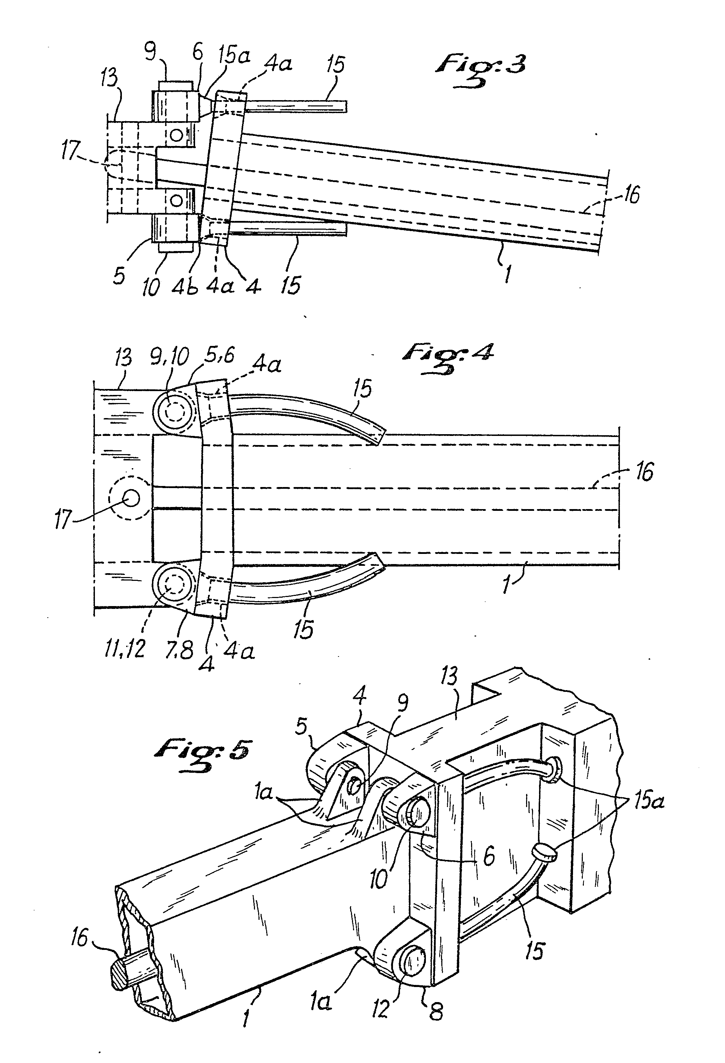

Lorsque la charrue réversible sera retournée pour labourer avec les corps symétriques 2, le fonctionnement sera identique, l'age s'appuyant alors sur les basculeurs 7 et 8. Sur la figure 3, le dispositif, représenté en vue de dessus, montre un pivotement latéral de l'age 1 lorsque l'obstacle rencontre le tranchant oblique du soc. La plaque d'appui pivote sur une de ses arêtes latérales 4b. Suivant la forme de l'obstacle et la direction de l'effort, l'age pourra même pivoter autour d'un seul point en appui sur un seul basculeur ; les tiges l5 assurant également le recentrage de la plaque pour la remise en position de travail normal.

Pour améliorer encore le centrage de l'age 1 en position d'équilibre, les faces d'appui de la plaque 4 sur les basculeurs peuvent être inclinées vers l'avant comme sur la figure 4.

Sur la figure 5, le montage des basculeurs et de la plaque d'appui est inversé. Les basculeurs 5,6,7,8 sont articulés respectivement en 9,10,11, 12 sur des oreilles la solidaires de l'age 1. La plaque d'appui 4 est alors solidaire de la console 13.

De la même façon les tiges 15 traversent des trous pratiqués dans la plaque 4.

Dans ces deux exemples, les tiges-guides 15 peuvent également servir de butée limitant le pivotement de l'age, l'extrémité libre 15a de chaque tige 15 ayant un diamètre supérieur au diamètre des trous 4a.

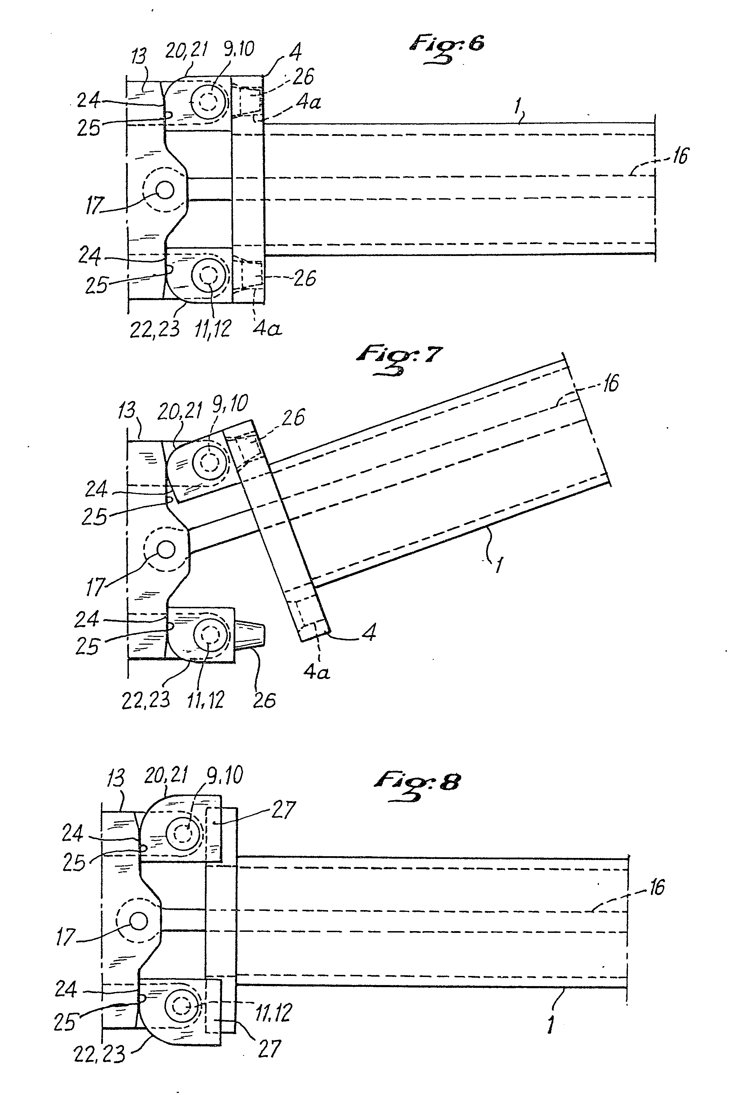

Les figures 6 et 7 représentent un deuxième mode de réalisation dans lequel les moyens de guidage ne sont constitués que par des pions tronconiques, correspondant aux embases tronconiques 15a des figures 1 à 5, les tiges 15 étant supprimées.

Afin d'éviter des basculements intempestifs des basculeurs 20, 21, 22, et 23, montés à pivotement sur les axes 9 à 12, ces derniers 20, 21, 22, 23 articulés respectivement en 9, 10,11, 12 comportent à l'opposé de la face d'appui sur la plaque 4, une partie plane 24 venant en butée sur une partie plane 25 de la console 13 lorsque l'age 1 est en position d'équilibre. La butée est disposée de telle façon que, lorsque l'age pivote dans le sens de la figure 7, les basculeurs 20 et 21 puissent pivoter avec l'age 1 et que les basculeurs 22 et 23 restent par gravité en butée sur la partie plane 25. Le maintien peut aussi être assuré par un ressort de rappel.

Le centrage de la plaque d'appui 4 est réalisé par les ergots tronconiques 26 s'encastrant en position d'équilibre dans un trou correspondant 4a de la plaque 4.

Sur la figure 8, le centrage de la plaque d'appui 4 est assuré par sa périphérie s'encastrant dans des logements correspondants 27 de chaque basculeur.

## Revendications

1. Dispositif de sécurité contre les surcharges pour charrue avec retour automatique après le passage d'un obstacle, dont l'age supportant les corps droit et gauche peut se débattre dans toutes les directions, l'extrémité avant de l'age étant munie d'une plaque d'appui maintenue en appui à plat sur le bâti de la charrue par un accumulateur d'énergie, caractérisé par le fait que la plaque d'appui (4) repose sur la partie plane de quatre basculeurs (5 à 8, 20 à 23), chaque basculeur étant indépendamment monté à pivotement sur un axe (9 à 12), lesdits basculeurs étant disposés deux à deux de part et d'autre du plan de symétrie de l'age (1).

2. Dispositif de sécurité selon la revendication 1, caractérisé par le fait que la partie plane de chaque basculeur (5 à 8, 20 à 23) contre laquelle s'appuie ladite plaque d'appui (4) est prolongé par une tige-guide (15) traversant ladite plaque d'appui (4) par un trou (4a).

3. Dispositif selon la revendication 2, dans lequel chaque trou (4a) est d'un diamètre légèrement supérieur à celui de la tige-guide (15) qui le traverse.

4. Dispositif de sécurité selon la revendication 2 ou 3, caractérisé par le fait que la base (15a) de la tige (15) est de section tronconique s'encastrant dans un trou tronconique correspondant de la plaque d'appui (4).

5. Dispositif de sécurité selon l'une des revendications 2 à 4, caractérisé par le fait que l'extrémité libre de chaque tige (15) a une section supérieure au diamétre du trou (4a) de la plaque (4) afin de limiter le pivotement de l'age (1).

6. Dispositif de sécurité selon les revendications 2 à 5, caractérisé par le fait que chaque tige (15) est courbée en arc de cercle orientée vers le basculeur symétrique.

7. Dispositif de sécurité selon la revendication 1, caractérisé par le fait que chaque basculeur (20 à 23) comprend une butée (24) n'autorisant son pivotement que dans un sens.

8. Dispositif de sécurité selon la revendication 7, caractérisé par le fait chaque basculeur (20 à 23) est maintenu sur sa butée (24) par gravité ou par un ressort de rappel.

9. Dispositif de sécurité selon les revendications 7 et 8, caractérisé par le fait que chaque basculeur comprend un ergot de centrage (26), s'encastrant dans un trou (4a) correspondant de la plaque d'appui (4).

10. Dispositif de sécurité selon les revendications 7 et 8 ,caractérisé par le fait que la plaque d'appui (4) est centrée par sa périphérie dans des logements (27), correspondants de chaque basculeur (20 à 23).

11. Dispositif de sécurité selon l'une quelconque des revendications précédentes, caractérisé par le fait que les faces d'appui de la plaque (4) sont légèrement inclinées vers l'avant.

12. Dispositif de sécurité selon les revendications 1 à 11, caractérisé par le fait que les basculeurs (5 à 8 ; 20 à 23) sont articulés sur le bâti de la charrue, la plaque d'appui (4) étant sur l'age (1).

13. Dispositif de sécurité selon les revendications 1 à 11, caractérisé par le fait que les basculeurs (5 à 8 ; 20 à 23) sont articulés sur l'age (1), la plaque d'appui (4) étant sur le bâti de la charrue.

*Fig.1*

*Fig: 2*

*Fig. 3*

*Fig. 4*

*Fig. 5*

Fig. 6

Fig. 7

Fig. 8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 386 241 (BAERT) * Page 4, lignes 1-29; figures 1-7 * | 1,2 | A 01 B 61/04 |
| A | FR-A-2 255 833 (DEMBLON) | | |
| A | FR-A-2 478 423 (PLADEVALL MARGENET) | | |
| A | GB-A-2 053 635 (DOW DESWELL) | | |

DOMAINES TECHNIQUES RECHERCHES (Int. Cl.4)

A 01 B

Le présent rapport de recherche a été établi pour toutes les revendications

| Lieu de la recherche | Date d'achèvement de la recherche | Examinateur |
|---|---|---|
| LA HAYE | 21-03-1986 | VERDOODT S.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82